# EUROPEAN PATENT APPLICATION

(11) **EP 4 027 630 A1**
(43) Date of publication of application: **13.07.2022**
(21) Application number: 20850287.2
(22) Date of filing: 05.08.2020
(51) Int. Cl.: H04M 3/56, H04M 11/00, G06F 3/16, G06F 13/00

(54) **GROUP CALLING SYSTEM, GROUP CALLING METHOD, AND PROGRAM**

(30) Priority: 05.08.2019 JP 2019144053
(71) Applicant: Bonx Inc., Tokyo 154-0012 (JP)
(72) Inventor: OMORI Genki, Tokyo 154-0012 (JP); MIURA Hiroshi, Tokyo 154-0012 (JP)
(74) Representative: Grünecker Patent- und Rechtsanwälte PartG mbB
(86) International application number: PCT/JP2020/030064
(87) International publication number: WO 2021/025074

(57) **Abstract**

The present invention is to connect group calling with an external system, and output voices from the external system to group calling, and input voices from the group calling to an external system while making group calling without the sense of incompatibility. In the group calling system 1 that makes group calling with a plurality of terminals, a daemon server 200 always receives voice data from a voice server 220 or an external system 330 that transmits or receives voices to and from a user terminal 50, and changes the received voice data into data in a predetermined format. The voice data in the changed format is transmitted to the external system 300 when the voice data is received from the voice server 220 and to the voice server 220 to output the voice data to the terminal 50 when the voice data is received from the external system 300.

## Description

### TECHNICAL FIELD

The present invention provides a group calling system, and a group calling method and program that enable users to make group calling with a plurality of terminals.

### BACKGROUND

The system that allows a group consisting of one or more persons to call (group calling) for a conference call, etc., with telephones and IP telephones is known. Such a system registers the terminal devices that the calling persons have as a group before the call begins, makes group calling among the terminal devices registered for the group, and exchanges the voices.

As an example of such a system, the constitution in which each calling person uses a headset connected with its own terminal device through the Near Field Communication system to make group calling is disclosed (refer to Patent Document 1).

### Document in the existing art

### Patent Document

Patent Document 1: JP 2011-182407A

### SUMMARY

### TECHNICAL PROBLEMS

However, once group calling starts, the composition of Patent Document 1 interrupts group calling to take voices from the outside into the call but cannot output the content of the group calling to the external system. For example, while the staff of the nursing home are making group calling, one of the staff cannot audibly register the daily report to a nursing system, and an external system that detected a nurse call during group calling cannot audibly output the nurse call to this group calling.

An objective of the present invention is to provide a group calling system, and a group calling method and program that have a capability of connecting group calling with an external system, and outputting voices from the external system to group calling, and inputting voices from the group calling to an external system while making group calling without the sense of incompatibility.

### SOLUTIONS TO PROBLEMS

The present invention provides the following solutions.
(1) A group calling system that makes group calling with a plurality of terminals includes:
   a resident receipt unit that always receives voice data from a voice server or an external system that transmits and receives a voice to and from the terminals;
   a format changing unit that changes the received voice data into data in a predetermined format (e.g., a linear PCM format when receiving it from a voice server, a first format described later when receiving it from an external system); and
   a transmission unit that transmits the voice data in the changed format to the external system when the voice data is received from the voice server and to the voice server to output the voice data to the terminals when the voice data is received from the external system.

According to the present invention, the group calling system that makes group calling with a plurality of terminals always receives voice data from a voice server or an external system that transmits and receives a voice to and from the terminals, changes the received voice data into data in a predetermined format, and transmits the voice data in the changed format to the external system when the voice data is received from the voice server and to the voice server to output the voice data to the terminals when the voice data is received from the external system.

The present invention is the category of a system, but the categories of a method, a program, etc., have similar functions and effects.

(2) In the group calling system according to (1), when the transmission unit receives the voice data from the external system, the terminal includes:
a voice bot display unit that displays a voice bot as a virtual user that represents the external system in the group calling; and
a bot output unit that has the voice bot output voice data from the external system as voice data through the voice server.

(3) In the group calling system according to (1), when the transmission unit receives the voice data from the voice server, the terminal includes:
a voice bot display unit that displays a voice bot as a virtual user that represents the external system in the group calling; and
a voice data transmission unit that transmits voice data output to the voice bot to the voice server,
the voice data is received through the voice server that has received the voice data, the format changing unit changes the format of the voice data, and
the transmission unit transmits the voice data in the changed format to the external system.

### ADVANTAGEOUS EFFECTS OF INVENTION

The present invention can provide a group calling system, and a group calling method and program that have a capability of connecting group calling with an external system, putting voices in group calling, and outputting voices from the group calling to an external system while making group calling without the sense of incompatibility.

### BRIEF DESCRIPTION OF THE DRAWINGS

Fig. 1 is an overall schematic diagram of the group calling system 1.
Fig. 2 is a functional block diagram of the daemon server 200, the command server 100, and the user terminal 50.
Fig. 3 shows the voice output process from the external system 300 to group calling.
Fig. 4 shows the input process from the group calling to the external system.
Fig. 5 is a flow chart of the keyword detection process performed by the command server 100 and the daemon server 200.

### DETAILED DESCRIPTION

Embodiments of the present invention will be described below with reference to the attached drawings. However, these are illustrative only, and the scope of the present invention is not limited thereto.

### Overview of group calling system 1

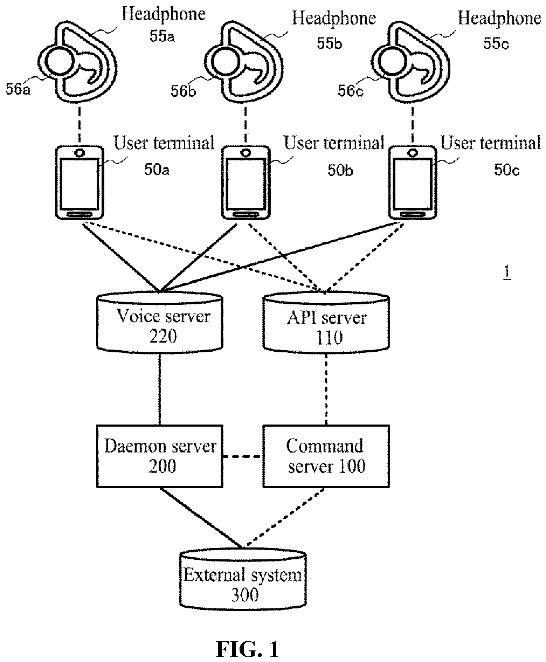

A preferable embodiment of the present invention is described below with reference to Fig. 1. Fig. 1 is an overview of the group calling system 1 according to a preferable embodiment of the present invention. The group calling system 1 may include user terminals 50a, b, c, a voice server 220, an API (APPLICATION PROGRAMMING INTERFACE) server 110, a daemon server 200, a command server 100, and an external system 300.

The user terminals 50a, b, c are communicatively connected with the voice server 220 and the API server 110, the voice server 220 is communicatively connected with the daemon server 200 to transmit and receive voice data, and the API server 110 is communicatively connected with the command server 100. The external system 300 is communicatively connected with the daemon server 200 and the command server 100.

For example, the user terminals 50a, b, c may be mobile terminals such as smart phones and tablet terminals or wearable terminals such as head mounted displays such as smart glasses. To make group calling, ear-hook headsets 55a, b, c communicatively connected with the user terminals 50a, b, c through the Near Field Communication, etc., may be used, which may be input and output the voices of the users.

An application program for group calling is installed and executed in the user terminals 50a, b, c by communicating with the API server 110 and the voice server 220. The user terminals 50a, b, c are associated with the respective user IDs, and one group calling made by the user terminals 50a, b, c is assigned to a talkroom ID to distinguish from other group callings. As the result, the conversation in the talkroom designating specific members is not transmitted to undesignated members.

To make group calling without the sense of incompatibility, the user terminals 50a, b, c change the format of voice data as needed. Specifically, user's voices acquired by a microphone built in the headphones 55a, b, c of the user terminals 50a, b, c are acquired in a successive voice data, for example, a linear PCM (PULSE CODE MODULATION) format. In general, in voice conversation, voice data is successively long because the end of the speech of a user as a speaker is unpredictable beforehand, and voice data becomes successive as long as a speaker keeps talking.

The user terminals 50a, b, c fragment the received successively long data in a linear PCM format into, for example, data with a length of 10 milliseconds to 1 second, optimally 40 milliseconds balancing between the data size and the delay time and generates a voice packet encoded in a "first format" to which a predetermined overhead is added. This packet may be generated at any time. The data may be received at the same time when the voice packet is generated without waiting for receiving the entire successively long data in a linear PCM format. The process to change into the "first format" may be performed in the user terminal 50 or in the voice server 220 after the data in a linear PCM format is transmitted as is to the voice server 220. For example, when the user terminal is in the 4G environment with a limited communication speed, the communication using the "first format" in which data is more compressed has communication efficiency. In this embodiment, the process to change is performed in the user terminal 50.

For example, the first format may be an OPUS format (lossy audio coding format) with a sampling rate of 16 KHZ to 44.1 KHZ. In this embodiment, the first format has an overhead storing, for example, (1) User ID that identifies a speaker, (2) Receiver user ID and Talkroom ID of a person who will receive the voices of a speaker, and (3) Time stamp that indicates the time of speech.

The user terminal 50c receiving a speech transmits voice data in the first format to the voice server 220. The voice server 220 transmits this voice data to the user terminals 50 other than the speaker's user terminal. The user terminals 50a, b sequentially receiving voices decode the voice data to voices again in order of the time stamp stored in the overhead. As the result, the user terminals 50a, b can catch the speech to establish group calling. The first format is fragmented in a short time of 0.5 seconds or less, preferably 30 to 40 milliseconds to enable a call in a substantial real time (short delay possible comparing well with real time on practical use) without waiting for the end of long voice data in a linear PCM. The first format fragmented in a short time will not cause a big problem because the listener can catch and understand the meaning even if one voice packet is not received.

The system of this embodiment including the headphones 55a, b, c and the user terminals 50a, b, c has the function that detects the speech of a person wearing one of the headphones. The function is able to switch between the speech detection mode that emphasizes or selects and encodes the voices of the speaker and the push-to-talk mode that starts to acquire the voices of the speaker only when the buttons 56a, b, c installed in the headphones 55a, b, c are pushed.

As described later, the voice server 220 may transmit voice data in the first format to the user terminals 50a, b, c when the voice server 220 receives the voice data in the first format from a predetermined server such as the daemon server 200.

The external system 300 may be the core system, or the ERP (ENTERPRISE RESOURCE PLANNING) system, that cooperates with group calling, which may be a nursing system, a work management system, etc., as described above.

The command server 100 is communicatively connected with the daemon server 200, which transmits a "format change command" to the daemon server 200 to change the voice data that the daemon server 200 received into data in a predetermined format in response to an instruction from the external system 300 or the API server 110.

The daemon server 200 always receive voice data from the voice server 220 and the external system 300, changes the voice data into data in a predetermined format based on the "format change command" from the command server 100, and transmits the changed voice data to the voice server 220 or the external system 300.

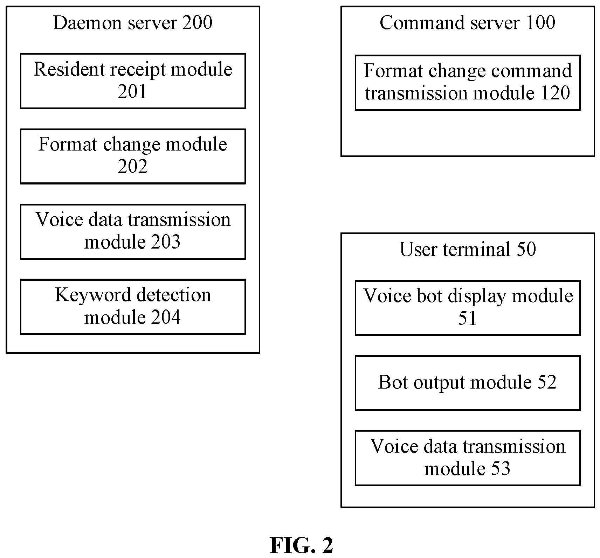

As shown in Fig. 2, the daemon server 200 stores a predetermined program in a memory and has a processor (e.g., CPU) read a program stored in the memory to achieve a resident receipt module 201, a format change module 202, a voice data transmission module 203, and a keyword detection module 204. The command server 100 stores a predetermined program in a memory and has a processor read a program stored in the memory to achieve a format change command transmission module 120. The user terminal 50 stores a predetermined program in a memory and has a processor read a program stored in the memory to achieve a voice bot display module 51, a bot output module 52, and a voice data transmission module 53.

The functions of the command server 100 and the daemon server 200 may be achieved one computer or a plurality of computers such as cloud computers. The command server 100 and the daemon server 200 may be achieved by separated computers.

### Voice output process to group calling

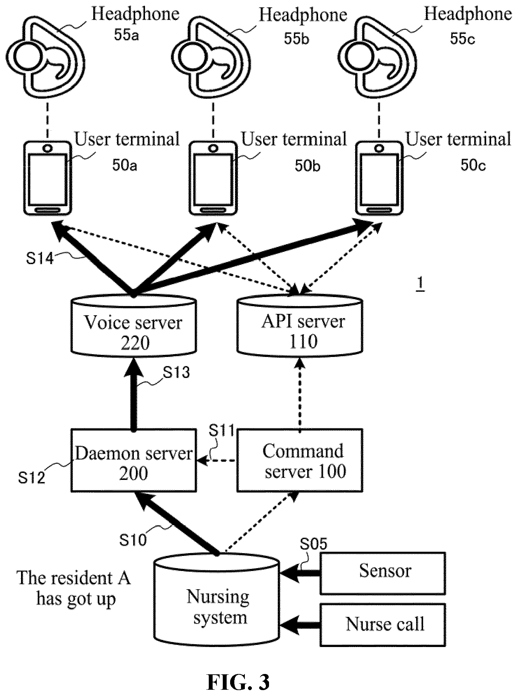

The process that outputs voice data from the external system 300 to group calling with reference to Fig. 3. As one example of the external system 300, a nursing system that manages the status and the behavior of residents in a nursing home is cited as needed.

The external system 300 may have the function that transmits the voice data output from the core system (ERP) to other computers, or may be provide with a voice conversion engine that changes a predetermined data (e.g., text data) into voice data and have the function that transmits the changed voice data to other computers.

In a nursing system, a sensor that is installed in a door, a bed, etc., or a sensor that a resident wears detects that the resident gets up. The sensor transmits data that detects the resident's getting up to the nursing system (Step S05). When the nursing system has a voice conversion engine, the nursing system starts the voice conversion engine to change the data detected by a sensor into voice data, for example, outputting "The resident A has got up." The voice data "The resident A has got up." may be previously recorded and stored and previously associated with the data detected by a sensor to select the recorded data as voice data after the detection.

The nursing system transmits the voice data changed in this way or the selected recorded data (hereinafter collectively referred to as voice data) to the daemon server 200 (Step S10). The voice data or the recorded data to be transmitted may be successively long data in a format used in the external system, for example, a linear PCM format. The resident receipt module 201 of the daemon server 200 receives the voice data.

At least the resident receipt module 201 is always running to have a program residing in a memory as a so-called daemon receive voice data because the daemon server 200 does not know when to receive voice data from a nursing system as the external system 300. The resident receipt module 201 (daemon) is a minimum necessary size of program defined to start a necessary subsystem in response to the input of voice data, which has a small size and does not operate as long as voice data is not input. Therefore, the resident receipt module 201 never needlessly increases the load of the entire system.

When the nursing system transmits voice data to the daemon server 200, the nursing system instructs the command server 100 to change the format of this voice data into a predetermined format. The predetermined format is the above-mentioned first format.

The command server 100 transmits a "format change command" to the daemon server 200 to change the voice data that the daemon server 200 has received into data in the first format as the predetermined format instructed from the nursing system (Step S11).

The overhead of the voice data received from the nursing system (external system 300) stores:
(1) User ID that identifies a speaker
   This is the user ID of the nursing system or the bot ID. In other words, the external system 300 participates in group calling as a "bot" to which a user ID is assigned as one virtual user and outputs voices
(2) Receiver user ID and Talkroom ID of a person who will receive the voices; and
(3) Time stamp that indicates the time of speech.

The overhead of the first format is generated based on this overhead. The receiver user ID that will receive voice data reads and sets the user ID of the care person who takes charge of "Resident A" at the time based on the time stamp information from a shift management system not shown in the attached drawings. In this case, the ID of the nursing system and the ID of the care person in charge are members of the talkroom. For example, the voice data is not transmitted to the medical team including a doctor and a clerical work team.

The format change module 202 of the daemon server 200 is read out to the main memory in response to a startup signal from the resident receipt module 201 and started to change the voice data received from the external system 300 in, for example, a linear PCM format, into data in the first format same as the format (OPUS format in this embodiment) used in the group calling system based on the received "format change command" (Step S12).

The voice data transmission module 203 of the daemon server 200 transmits the voice data in the changed format (changed voice data) to the voice server 220 to output this voice data to the user terminals 50a, b, c that the command server 100 instructs (Step S13).

The voice server 220 receives the changed voice data, refers to the talkroom ID and the user ID that are stored in the first format, and transmits the changed voice data to the user terminals 50a, b, c to which the IDs are assigned (Step S14).

The voice bot display modules 51 of the user terminals 50a, b, c output and display a "bot" that is a virtual user corresponding to the nursing system to the screen, the bot output modules 52 of the user terminals 50a, b, c receive the changed voice data and audibly output this changed voice data as a "bot" of the nursing system through the headphones 55a, b, c. Specifically, when the voice message is put from the external system into the conversation that the users have by using a headphone 55, the users can naturally receive the system message as if a new user has participated in the conversation. Moreover, the OPUS format used in this embodiment presupposing to the conversation that a lot of persons have is suitable for transmitting and receiving small data with small delay. The message can be transmitted to each user without obstructing the conversation by decoding the OPUS format to a linear PCM in the receiver's user terminal even if a mechanical voice output as a system message from a bot is superimposed on the conversation continuing among persons. The API server 100 may cooperate with an application program in the user terminals 50a, b, c to achieve the display of a voice bot and the control of voice output.

The content of the voice output from the nursing system is typically a fixed phrase unlike that from a person. When the daemon server 200 receives a predetermined packet from the external system 300 without receiving voice data from the external system 300, the voice data previously associated with the packet can be output to the user terminals 50a, b, c in group calling.

However, in this embodiment, the external system 300 outputs usual voice data that the external system 300 adopts even if the content is a fixed phrase. The daemon server 200 of this embodiment changes the received voice data into data in a predetermined first format. The external system 300 as a general-purpose system only has to output data as the usual voices that the external system 300 originally adopts, which needs not be a system that outputs the first format. When voices are output to group calling in this embodiment, a voice message can be output through the connection with the group calling system in this embodiment with very little customization. Furthermore, the system including the daemon server 200 also only has to assign a new user ID to the external server 300' to be additionally connected and establish a calling environment as if the external server 300' is the same as other users. Thus, a new external system 300' can be added to group calling without putting an enormous burden on the system. In this case, a new type of "bot" may be added to an external system 300' to be newly added, or a plurality of external systems 300 may be integrated to allow one "bot" to talk.

The daemon server 200 may receive voice data periodically output from the external system 300. In this case, periodically outputting is to output at every previously set time for the services such as meal, bath, and medical examination that a resident and a staff (user) who receives and provides at every certain period or regular intervals.

Even in this case, as described above, the daemon server 200 periodically acquires voice data and changes this voice data into voice data in the changed format based on a "format change command" from the command server 100 and transmits this voice data in the changed format to the voice server 220.

When the user terminals 50a, b, c audibly output voice data from the nursing system through the headphones 55a, b, c, the voice bot display module 51 may output and display a voice bot on the screen as a virtual user in group calling, control the moving image as if this voice bot talks, and the bot output module 52 may audibly output voice data through the headphones 55a, b, c.

### Input from group calling to external system

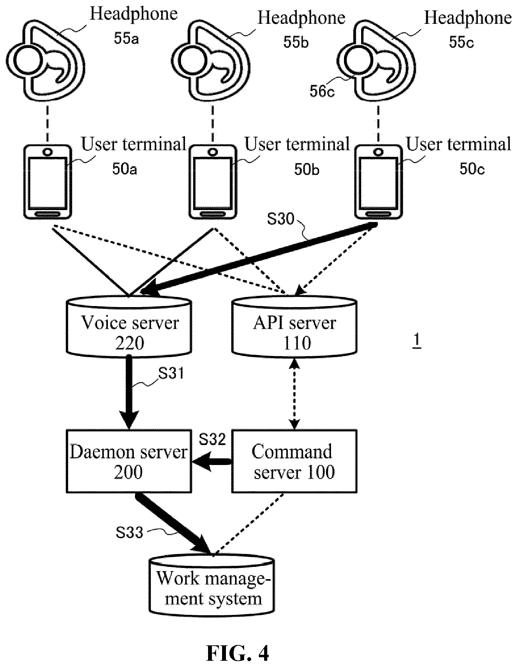

The process to input voice data from the user terminals 50a, b, c making group calling to the external system 300 with reference to Fig. 4 through the servers.

The microphone of the headphone 55c receives user's speech, which may be a "command declaration keyword" described later), and the voice data transmission module 53 of the user terminal 50c changes a long voice data in a linear PCM format, etc., into the above-mentioned first format and transmits the voice data to the voice server 220 (Step S30).

The voice server 220 receives and transmits the voice data to the daemon server 200 (Step S31). In this case, the voice server 220 transmits the voice data to the user terminals A, B other than a speaker's user terminal.

According to Step S31, the resident receipt module 201 of the daemon server 200 receives the voice data in the first format from the voice server 220. The resident receipt module 201 is always running to have a program residing in a memory as a daemon receive voice data because the resident receipt module 201 does not know when to receive voice data from the voice server 220.

On the other hand, the command server 100 transmits a "format change command" to have the daemon server 200 change the format (the first format) of the voice data that this daemon server 200 has acquired (e.g., data in a "linear PCM format" that has not been fragmented) to the daemon server 200.

On the assumption of this process, the user terminal 50c of a speaker transmits data related to the voice data to the API server 110 at the timing of when the user terminal 50c transmits the voice data to the voice server 220. The data related to the voice data may indicate the ID of the external system 300 using this voice data and the type of the format changed by the daemon server 200.

The API server 110 receives the data related to the voice data and transmits the predetermined data to the command server 100. The command server 100 receives the predetermined data from the API server 110 and transmits a "format change command" to the daemon server 200 for example, to change the voice data in the first format into data in a linear PCM format that has not been fragmented based on this predetermined data.

The resident receipt module 201 of the daemon server 200 receives a "format change command" from the command server 100 (Step S32). The resident receipt module 201 is always running to have a program residing in a memory as a daemon receive a "format change command" because the resident receipt module 201 does not know when to receive a "format change command" from the command server 100.

The format change module 202 of the daemon server 200 changes the acquired voice data into data in a linear PCM format that has not been fragmented based on the instruction of a "format change command" received from the command server 100.

The voice data transmission module 203 of the daemon server 200 transmits the voice data in the changed format to the external system 300 (Step S33). The external system 300 can perform character recognition on the voice data in the changed format to input the data to the system, for example, with the voice conversion engine provided in the external system 300 or execute a command.

In the example of the work management system used in a service garage, voices to confirm start of work aloud, for example, "The SUV with a licence plate of 12-34 has entered for an oil change." can be transmitted to the work management system as voice data, "worker name = the name of the person in charge associated with a user ID", "work name = oil change recognized in the voices", and "work object = SUV with a license plate of 12-34 recognized in the voices" that are contained in this voice data, and "the matching result of the work objects" can be input, and "time stamp of the voice data" can be automatically recorded as "time of start of work". The confirming aloud is to inform work situation to the surroundings in various work places, which is used to generate the work record to significantly enhance work efficiency. In the above-mentioned example of a service garage, the status of end of oil change can be input to the daily report data of the system of the service garage when the voice data indicating the confirmed end of work "Oil change OK" aloud. Especially, as soon as the work record is completed without washing the dirty hands after oil change, etc., at the end of work, the next work can be started to significantly enhance work efficiency.

Thus, the user terminal 50c changes voice data in a linear PCM format into fragmented data in the first format and outputs the voices to the user terminals 50a, b through the voice server 220 without the sense of incompatibility in group calling, and then the daemon server 200 changes the voice data in the first format into the voice data in a linear PCM format. Unlike the conversation in which it is important to transmit and receive voice data in real time, the voice data transmitted to the external system 300 is mainly a command instruction controlling the system operation and a record matter, which is often less important to transmit and receive the voice data in real time. Since the format of the voice data output to the external system 300 is less necessary to the same as the first format used in calling, the format of the voice data is enough to be a linear PCM format originally adopted by the external system 300 in this embodiment. Especially, for the command instruction, the data format in which the start and the end of data are clear is more suitable than the OPUS format for fragmentation and transmission of data, which is preferably WAV (WAVEFORM AUDIO FORMAT), for example.

Therefore, the external system 300 needs not process voice data in the first format unique to the system that makes group calling, but can achieve the above-mentioned process only if the external system 300 processes voice data in a standard linear PCM format.

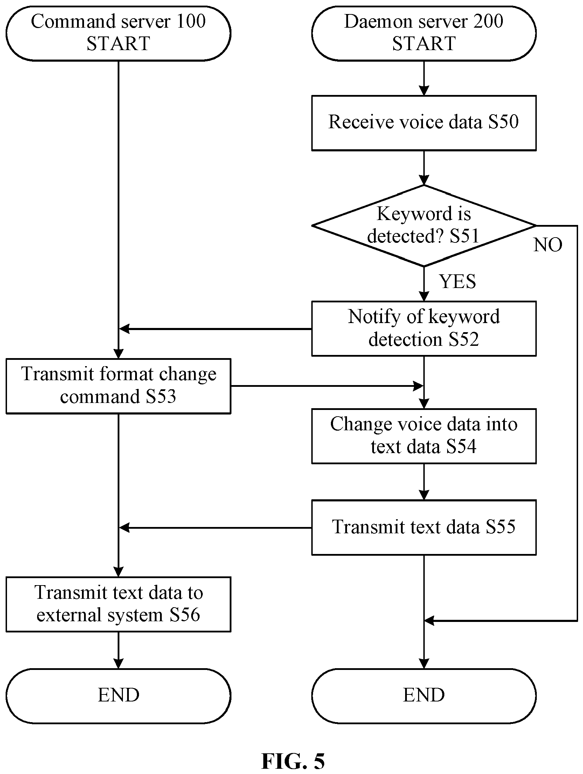

The daemon server 200 may detect a predetermined keyword (previously provided cheer and declaration) contained in the voice data received from the voice server 220, change the voice data after this keyword to a predetermined data, and transmit the predetermined data to the external system 300. This process is described with reference to Fig. 5.

### Keyword detection process

Fig. 5 is a flow chart of the keyword detection process performed by the command server 100 and the daemon server 200. The data to detect a "command declaration keyword" described later is previously stored in the daemon server 200 as assumption of the below-mentioned process.

After the above-mentioned Step S31, the resident receipt module 201 of the daemon server 200 receives the voice data from the user terminal 50c through the voice server 220 (Step S50).

The keyword detection module 204 judges whether or not the received voice data contains a keyword declaring a command (Step S51). Specifically, the judgement is made by comparing the data to detect a "command declaration keyword" previously stored in the daemon server 200 with the received voice data.

The command declaration keyword is a word to start a command instruction to have a computer system not a user input, for example, a predetermined cheer or declaration (e.g., "HEI, SIRI", "OK, GOOGLE"). SIRI and GOOGLE are trademarks or registered trademarks.

The keyword detection module 204 performs voice recognition on the acquired voice data and judges whether or not the voice data contains a keyword. At this time, the keyword detection module 204 may perform voice recognition, or the daemon server 200 may output the voice data to an API recognizing voice data, acquire the recognition result from this API, and judge whether or not the voice data contains a "command declaration keyword" based on this recognition result.

When a command is audibly transmitted to a specific external system 300 such as a work management system or a schedule management system, the other users in the group calling need not to hear a "command declaration keyword". In this case, at the timing of when a speech starts, the speech detection function (speech detection mode) provided in the user terminals 50a, b, c cannot distinguish whether the speech is a "command declaration keyword" or directed to the other users. If indistinguishable voice data is transmitted, a command declaration keyword and the subsequent command instruction are transmitted to the other users as a part of conversation like other typical conversation. Then, after the other users hear the speech, the external system 300 recognizes that the speech is a "command declaration keyword".

Then, in the push-to-talk mode by the button 56c of the headphone 55c to which the user speaks, for example, as an operation to have the voice server 220 and the daemon server 200 recognize that a "command declaration keyword" is about to be spoken, a "command declaration keyword" and the subsequent command instruction can be filtered by a double-click, a long press, etc., before the speech starts so that the other users cannot hear them. Moreover, the headphone 55c can be put in the waiting state for a command input by a double-click to filter a "command declaration keyword", and, for example, may output voice data to not the group calling but only the voice recognition engine for about 15 seconds after a double-click.

Specifically, the user terminal 50c and the voice server 220 that have detected that a speaker presses the button 56c long can filter any command instructions so that the other users cannot hear them by setting the ID of the external system 300 to be instructed by a "command declaration keyword" in the receiver user ID to be contained in the overhead of the first format while the button 56c is pressed long.

On the other hand, in an environment, etc., in which the button 56 cannot be pressed by releasing the operator's hand from operation equipment at a work place, etc., the headphone 55c needs to be in the speech detection mode that detects a "command declaration keyword" in a speech. In this case, when the user terminal 50c and the voice server 220 recognize that the speech is a "command declaration keyword", the other users hear the command declaration keyword. However, the user terminal 50c and the voice server 220 set a predetermined external system 300 to the receiver user ID in the overhead, so that the subsequent command instruction can be filtered. For this purpose, in this embodiment, the keyword is detected at the same time when a linear PCM format is changed into the first format. As described above, in the conversation in which a speech unpredictably ends, the linear PCM format is changed into the first format as the OPUS format as needed without waiting for receiving the entire linear PCM format. Since the keyword is detected at the same time when a linear PCM format is changed into the first format, a command declaration keyword can be detected without waiting for receiving the entire linear PCM format. Therefore, the users can be promptly filtered. Especially, a command declaration keyword infrequently appears during a speech and is mostly declared when the speech starts. The keyword is detected immediately after data is received, and the detection accuracy of a command declaration keyword may be lowered to decrease the load of the system when a speech continues for a predetermined time or more, for example, five seconds. In the above-mentioned example of a service garage, a commonly used phrase, such as "Oil change OK", is frequently used in the work place. Such a commonly used phrase may be registered as a command on the whole. A specific work item term such as "Oil change" and a specific work state term such as "OK" or "Start" each may be associated with a code and registered in a dictionary to transmit only the associated code to the work record system as the external system 300. Confirming such works aloud is to let the workers around a speaker to know the speaker's work progress and therefore needs not to be filtered. Registering a commonly used phrase as a command can improve the accuracy of voice recognition and the system reliability and substantially reduce the data traffic compared with the case of transmitting voice data to the external system 300 to decrease the load of the system.

Returning to Fig. 5, if the keyword detection module 204 judges that the received voice data does not contain a "command declaration keyword" (Step S51 NO), the process ends. If the keyword detection module 204 judges that the received voice data does not contain a "command declaration keyword", the group calling system 1 may perform Steps S32 and S33 described above.

On the other hand, if the keyword detection module 204 judges that the received voice data contains a "command declaration keyword" (Step S51 YES), the keyword detection module 204 notifies the command server 100 that the voice data contains a "command declaration keyword" (Step S52).

At this time, to have a speaker recognize that the external system 300 is ready to receive a command instruction, the keyword detection module 204 may output the reply via a sound effect (at the sound of the beep) or voices to the user terminal 50c of the speaker through the voice server 220.

The format change command transmission module 120 of the command server 100 judges that the voice data that the daemon server 200 has acquired is for the external system 300 based on the notification. The format change command transmission module 120 transmits a "format change command" changing the voice data of a command instruction audibly output after a "command declaration keyword" into a predetermined data to the daemon server 200 (Step S53).

In Step S53, the format change command transmission module 120 transmits a "format change command" to the daemon server 200 to change the data of the command instruction into a predetermined data. The "format change command" is for the daemon server 200 to change the voice data of the command instruction into a predetermined data. For example, the daemon server 200 performs the process necessary to change the voice data into text data.

The format change module 202 of the daemon server 200 changes the voice data (of the command instruction) after a keyword in the acquired voice data into a predetermined data (e.g., text data) based on the acquired format change command (Step S54).

The daemon server 200 transmits the text data to the command server 100 (Step S55), and the command server 100 transmits the text data to the external system 300 (Step S56). The external system 300 that has received the text data executes the predetermined command or inputs the predetermined data as a command instruction based on the text data.

In the above-mentioned embodiment, the external system 300 is one system (e.g., nursing system) for the daemon server 200 and the command server 100. However, a plurality of external systems 300 (e.g., nursing system and work management system) may be connected with the daemon server 200 and the command server 100 to achieve the interrupt to group calling and the input to the external systems 300 by the group calling system 1. In this case, the external systems 300 are associated with different "bots" described above, and the user terminal 50 outputs the bots in different display modes and also outputs voices. In this case, the bots may be characteristically associated with the external system 300 or may be symbolized by integrating a plurality of systems. Thus, in the above-mentioned nursing system, the schedule control module audibly notifies all the care persons of a scheduled bathing time, registers the start of the work by the nursing person as the person in charge in the management record system when the nursing person who uses the terminal 50a answers "OK", and updates the work record based on the speech "Resident A has got out of a bath." At the same time of when another care person talks to Resident A "You have long nails.", helping Resident A change clothes, still another care person prepares to clip her nails, and the management system adds "clipping nails" as a work item to easily enable their cooperation to function.
(1) A voice input-output system connected with a system, in which a plurality of terminals are connected with an API server and a voice server to make group calling, includes:
   a command unit that is connected with the API server and an external system and processes and controls data other than voice data; and
   a daemon unit that is connected with the voice server, the command unit, and the external system, in which
   the daemon unit includes:
      a change unit that changes the voice data received from the external system into data in a predetermined format based on an instruction from the command unit; and
      a daemon output unit that outputs the changed voice data to the voice server to output the changed voice data to the terminal instructed by the command unit.
(2) A voice input-output system, in which a plurality of terminals are connected with an API server and a voice server, the API server identifying the terminals, includes:
   a command unit that is connected with the API server and an external system and processes and controls data other than voice data; and
   a daemon unit that is connected with the voice server, the command unit, and the external system, in which
   the daemon unit includes:
      a change unit that changes the voice data received from the terminals through the voice server into a predetermined data based on an instruction from the command unit; and
   the command unit includes:
      an command output unit that outputs the changed predetermined data to the external system.
(3) In the voice input-output system according to (1), the change unit changes a predetermined voice data periodically output from the external system into data in a predetermined format based on an instruction from the command unit.
(4) In the voice input-output system according to (2),
   the daemon unit includes:
   a detection unit that detects a keyword contained in the voice data, and
   the change unit changes voice data after the detected keyword into a predetermined data.

To achieve the means and the functions that are described above, a computer (including a CPU, an information processor, and various terminals) reads and executes a predetermined program. For example, the program may be provided through Software as a Service (SaaS), specifically, from a computer through a network. The program may also be provided in the form recorded in a computer-readable medium. In this case, a computer reads a program from the record medium, forwards and stores the program to and in an internal or an external storage, and executes it. The program may be previously recorded in, for example, a storage (record medium) such as a magnetic disk, an optical disk, or a magnetic optical disk and provided from the storage to a computer through a communication line.

The embodiments of the present invention are described above. However, the present invention is not limited to the above-mentioned embodiments. The effect described in the embodiments of the present invention is only the most preferable effect produced from the present invention. The effects of the present invention are not limited to those described in the embodiments of the present invention.

### Description of reference numerals

1 Group calling system
10 Computer
50a-c User terminal
55a-c Headphone
100 Command server
110 API server
200 Daemon server
220 Voice server
300 External system

## Claims

1. A group calling system that makes group calling with a plurality of terminals, comprising:
a resident receipt unit that always receives voice data from a voice server or an external system that transmits and receives a voice to and from the terminals;
a format changing unit that changes the received voice data into data in a predetermined format; and
a transmission unit that transmits the voice data in the changed format to the external system when the voice data is received from the voice server and to the voice server to output the voice data to the terminals when the voice data is received from the external system.

2. The group calling system according to claim 1, wherein when the transmission unit receives the voice data from the external system, the terminal includes:
a voice bot display unit that displays a voice bot as a virtual user that represents the external system in the group calling; and
a bot output unit that has the voice bot output voice data from the external system as voice data through the voice server.

3. The group calling system according to claim 1, wherein when the transmission unit receives the voice data from the voice server, the terminal includes:
a voice bot display unit that displays a voice bot as a virtual user that represents the external system in the group calling; and
a voice data transmission unit that transmits voice data output to the voice bot to the voice server,
the voice data is received through the voice server that has received the voice data,
the format changing unit changes the format of the voice data, and
the transmission unit transmits the voice data in the changed format to the external system.

4. A group calling method executed by a group calling system that makes group calling with a plurality of terminals, comprising the steps of:
always receiving voice data from a voice server or an external system that transmits and receives a voice to and from the terminals;
changing the received voice data into data in a predetermined format; and
transmitting the voice data in the changed format to the external system when the voice data is received from the voice server and to the voice server to output the voice data to the terminals when the voice data is received from the external system.

5. A program causing a group calling system that makes group calling with a plurality of terminals to execute the steps of:
always receiving voice data from a voice server or an external system that transmits and receives a voice to and from the terminals;
changing the received voice data into data in a predetermined format; and
transmitting the voice data in the changed format to the external system when the voice data is received from the voice server and to the voice server to output the voice data to the terminals when the voice data is received from the external system.
